# EUROPÄISCHE PATENTSCHRIFT

(11) **EP 2 150 884 B1**
(45) Veröffentlichungstag und Bekanntmachung des Hinweises auf die Patenterteilung: **13.06.2018**
(21) Anmeldenummer: 08748999.3
(22) Anmeldetag: 18.04.2008
(51) Int. Cl.: G06F 12/02, G06F 21/79

(54) **ZUGRIFF AUF DEN MASSENSPEICHER EINES PORTABLEN DATENTRÄGERS**
ACCESS TO THE MASS STORAGE ON A PORTABLE DATA SUPPORT
ACCÈS À LA MÉMOIRE DE MASSE D'UN SUPPORT DE DONNÉES PORTABLE

(30) Priorität: 20.04.2007 DE 102007018769
(43) Veröffentlichungstag der Anmeldung: 10.02.2010
(73) Patentinhaber: Giesecke+Devrient Mobile Security GmbH, 81677 München (DE)
(72) Erfinder: STOCKER, Thomas, 81739 München (DE); BALDISCHWEILER, Michael, 81825 München (DE)
(86) Internationale Anmeldenummer: PCT/EP2008/003154
(87) Internationale Veröffentlichungsnummer: WO 2008/128729

(56) Entgegenhaltungen:
- WO-A-2006/134104
- US-A1- 2007 027 929
- US-A1- 2007 033 362

## Beschreibung

Die vorliegende Erfindung betrifft ein Verfahren zum Zugreifen auf Daten eines Massenspeichers eines portablen Datenträgers, der mit einem Endgerät in Verbindung steht, sowie einen derartigen portablen Datenträger. Üblicherweise wird ein von einem portablen Datenträger bereitgestellter Massenspeicher von einem Endgerät verwaltet, mit dem der portable Datenträger über eine geeignete Datenkommunikationsschnittstelle in Verbindung steht, damit das Endgerät auf dem Massenspeicher uneingeschränkt Daten speichern und aus diesem auslesen kann. Darüber hinaus ist auch ein interner Zugriff auf den Massenspeicher durch den portablen Datenträger selbst wünschenswert. In diesem Zusammenhang ist es denkbar, dass der portable Datenträger das von Seiten des Endgeräts auf dem Massenspeicher eingerichtete Dateisystem unterstützt und so eigenständig auf den Massenspeicher zugreifen kann. Bei dieser Lösung können jedoch einerseits Zugriffskonflikte bei gleichzeitigen Zugriffen des Endgeräts und des Datenträgers auftreten. Andererseits sind auch Dateninkonsistenten möglich, da Zugriffe des Datenträgers von dem Endgerät nicht als solche erkannt werden. WO2006/134104 A1 zeigt ein Endgerät mit einem geräteseitigen Massenspeicherdienst, welcher Daten über einen Cache in einen Flashspeicher eines Datenträgers schreibt.

Eine eigenständige und konfliktfreie Zugriffsmöglichkeit des Datenträgers auf den Massenspeicher kann beispielsweise dadurch erreicht werden, dass der Massenspeicher in einen privaten Massenspeicherbereich, der für exklusive Zugriffe des Datenträgers reserviert ist, und einen öffentlichen Massenspeicherbereich, der als Massenspeicher des Endgeräts dient, unterteilt wird.

Die EP 1 304 702 B1 offenbart im Zusammenhang eines kontrollierten Zugriffs auf urheberrechtlich geschützte Daten eine Möglichkeit, die Grenze zwischen derartigen privaten und öffentlichen Massenspeicherbereichen zu verschieben. Darüber hinaus schlägt die WO 03/083670 A1 vor, den privaten Massenspeicherbereich durch Manipulation des Dateisystems bzw. einer Dateisystemtabelle zu schaffen, so dass der private Massenspeicherbereich für ein mit dem Datenträger verbundenes Endgerät nicht mehr zugänglich ist. Jedoch bieten derartige Lösungen keinen gemeinsamen Massenspeicher, der sowohl vom Endgerät als auch vom Datenträger nutzbar ist.

Dementsprechend ist es die Aufgabe der vorliegenden Erfindung, einen konfliktfreien Zugriff des Datenträgers auf Daten des von einem Endgerät genutzten Massenspeichers zu ermöglichen.

Diese Aufgabe wird erfindungsgemäß durch ein Verfahren sowie einen portablen Datenträger und ein Endgerät mit den Merkmalen der unabhängigen Ansprüche gelöst. Die davon abhängigen Ansprüche beschreiben vorteilhafte Ausgestaltungen und Weiterbildungen der Erfindung.

Gemäß dem erfindungsgemäßen Verfahren greift eine von einem Prozessor eines portablen Datenträgers ausgeführte Applikation auf Daten eines Massenspeichers des Datenträgers zu, indem die Applikation ein Speicherkommando, das den Zugriff auf Daten des Massenspeichers betrifft, erzeugt und an einen geräteseitigen Massenspeicherdienst eines Endgeräts über eine Schnittstelle weiterleitet, über die der Datenträger mit dem Endgerät in Verbindung steht. Der geräteseitige Massenspeicherdienst wird von einem Prozessor des Endgeräts ausgeführt und führt den Zugriff auf Daten des Massenspeichers gemäß dem von der Applikation stammenden Speicherkommando zumindest mittelbar durch.

Der geräteseitige Massenspeicherdienst dient insofern als Synchronisationsmechanismus für Zugriffe auf Daten des Massenspeichers, da er sowohl Massenspeicherzugriffe einer auf dem Datenträger laufenden Applikation als auch Zugriffe von Applikationen des Endgeräts behandelt und dadurch sowohl die Datenkonsistenz des Massenspeichers gewährleistet als auch Zugriffskonflikte zwischen Datenträger und Endgerät vermeidet. Auf diese Weise ist auch ein gleichzeitiger Zugriff auf Daten des Massenspeichers durch den Datenträger und das Endgerät möglich.

Das Senden des Speicherkommandos der Applikation an das Endgerät bzw. dessen geräteseitigen Massenspeicherdienst kann von einem korrespondierenden datenträgerseitigen Massenspeicherdienst durchgeführt werden. Hierbei ist es möglich, dass der geräteseitige Massenspeicherdienst zumindest als installierbare Version auf dem Datenträger vorliegt, um ihn gegebenenfalls auf ein Endgerät zu laden. Falls der Datenträger eine Kommunikationsverbindung mit einem Endgerät eingeht, auf dem noch kein geräteseitiger Massenspeicherdienst installiert ist, der den Massenspeicher des Datenträgers unterstützt, kann der installierbare geräteseitige Massenspeicherdienst des Datenträgers auf das Endgerät überspielt und dort installiert werden. Nach Beendigung einer Datenkommunikationsverbindung zwischen dem Endgerät und dem Datenträger kann der geräteseitige Massenspeicherdienst auf dem Endgerät verbleiben, so dass er bei einer erneuten Verbindung mit dem Datenträger sofort einsatzbereit ist.

Auf diese Weise kann das erfindungsgemäße Verfahren auf einem Endgerät für beliebige Massenspeicher nachgerüstet werden, indem für jeden neuen Massenspeicher bzw. neuen Typ von Massenspeicher ein entsprechender geräteseitiger Massenspeicherdienst ausgehend von dem betreffenden Datenträger nachinstalliert wird. Der Zugriff des Endgeräts auf andere Arten von Massenspeichern wird dadurch nicht beeinträchtigt.

Auf dem Massenspeicher des Datenträgers ist in der Regel ein Dateisystem eingerichtet, das von einer auf dem Endgerät ausgeführten Dateisystemsteuerung vorgegeben wird. Diese Dateisystemsteuerung führt den Zugriff auf das Dateisystem des Massenspeichers durch, indem das von dem geräteseitigen Massenspeicherdienst an die Dateisystemsteuerung weitergeleitete Speicherkommando von dieser in ein entsprechendes Dateisystemkommando umgesetzt wird. Entsprechend dem Dateisystemkommando wird schließlich auf das Dateisystem des Massenspeichers und dadurch auf dessen Daten zugegriffen.

Es nicht notwendig, dass der Datenträger oder das Betriebssystem des Datenträgers das Dateisystem des Massenspeichers unterstützt, denn der geräteseitige Massenspeicherdienst ist in Verbindung mit der Dateisystemsteuerung vorzugsweise die einzige Instanz, die einen Zugriff auf Daten des Massenspeichers und auf dessen Dateisystem hat.

Das Endgerät kann einen Pufferspeicher umfassen, der dem Massenspeicher vorgeschaltet ist. Auf dem Pufferspeicher ist indirekt das gleiche von der Dateisystemsteuerung vorgesehene Dateisystem eingerichtet. Ein Zugriff auf das Dateisystem des Massenspeichers erfolgt dann dadurch, dass die Dateisystemsteuerung gemäß dem Dateisystemkommando auf den Pufferspeicher zugreift und die Daten des Massenspeichers und des Pufferspeichers regelmäßig oder auf Aufforderung abgeglichen werden.

Durch die erfindungsgemäße Koordinierung sämtlicher Massenspeicherzugriffe durch den geräteseitigen Massenspeicherdienst können die Vorteile eines derartigen Pufferspeichers für das Endgerät optimal genutzt werden, da eine Inkonsistenz zwischen Daten des Pufferspeichers und dem dahinter liegenden Massenspeicher nicht auftreten kann, weil alle Massenspeicherzugriffe ausgehend von dem Endgerät und/oder dem Datenträger immer über den Pufferspeicher durchgeführt werden und nie direkt auf dem Massenspeicher gerichtet sind.

Bei Zugriffen auf das Dateisystem des Massenspeichers, beispielsweise wenn unter Umgehung eines Pufferspeichers direkt auf den Massenspeicher zugegriffen wird oder wenn Daten des Massenspeichers mit denjenigen des Pufferspeicher abgeglichen werden, sendet die Dateisystemsteuerung das Dateisystemkommando über die Schnittstelle an eine auf dem Datenträger ausgeführte Massenspeichersteuerung, die schließlich den eigentlichen Zugriff auf den Massenspeicher durchführt. Dieser Zugriff der Massenspeichersteuerung kann "low-level" auf einer hardware- bzw. datennahen Abstraktionsebene erfolgen, indem die Architektur oder Hardware-Merkmale des Massenspeichers berücksichtigt werden, z. B. besondere Lese- oder Schreibzyklen. Falls es sich bei dem Massenspeicher beispielsweise um einen Flash-Speicher handelt, wird die Massenspeichersteuerung durch einen FTL-Dienst ("Flash Translation Layer") bereitgestellt, der bei einem auf dem Datenträger eingerichteten Dateisystem, beispielsweise einem FAT-Dateisystem ("File Allocation Table"), die speziellen Schreib- und Löschzyklen eines NAND- oder NOR-Flash-Speichers berücksichtigt.

Bei den Speicherkommandos einer Applikation des Datenträgers kann es sich sowohl um Lesezugriffe als auch um Schreibzugriff oder auch um die Ausführung von ausführbaren oder interpretierbaren Dateien des Massenspeichers handeln. Vorzugsweise ist der Massenspeicher als Flash-Speicher mit einem FAT-Dateisystem ausgestaltet, das von der Dateisystemsteuerung des Endgeräts unterstützt und eingerichtet wird. Der portable Datenträger ist vorzugsweise ein Chipkarte, SmartCard, Mobilfunkkarte, sichere Multimediakarte, ein USB-Speichergerät oder dergleichen, während das Endgerät vorzugsweise ein Personalcomputer oder Mobilfunkendgerät ist, der/das mit einer Schnittstelle zur Aufnahme und Herstellung einer Datenkommunikationsverbindung ausgestattet ist. Die Dateisystemsteuerung und/oder der geräteseitige Massenspeicherdienst des Endgeräts können selbstständige Applikationen sein, die von einem Prozessor des Endgeräts ausgeführt werden, oder Systemprogramme oder Betriebssystemkomponenten des Endgeräts.

Um einen Zugriff auf den Massenspeicher durch eine auf den Datenträger ausgeführte Applikation vorzugsweise auch dann zu ermöglichen, wenn der Datenträger nicht mit einem Endgerät in Verbindung steht, kann der portable Datenträger zusätzlich eine Massenspeicherverwaltung umfassen, die vorzugsweise Teil des Betriebssystems ist und den Massenspeicher in einen privaten Massenspeicherbereich, der exklusiv für Applikationen und Routinen des Datenträger zugänglich ist, und einen öffentlichen Massenspeicherbereich, der, wie oben erläutert, unter der Verwaltung der Dateisystemsteuerung des betreffenden Endgeräts steht, unterteilt. Vorzugsweise ist in dem privaten Massenspeicherbereich ein gegenüber den Dateisystem des öffentlichen Massenspeicherbereichs anderes oder ein manipuliertes Dateisystem eingerichtet, so dass die Dateisystemsteuerung keinen Zugang zu dem privaten Massenspeicherbereich hat bzw. sogar dessen Existenz nicht erkennen kann. Beispielsweise ist ein von der Dateisystemsteuerung vorgegebenes FAT-Dateisystem nur auf dem öffentlichen nicht aber auf dem privaten Massenspeicherbereich eingerichtet.

Um die Grenze zwischen dem öffentlichen und dem privaten Massenspeicherbereichs zugunsten des privaten Massenspeicherbereichs zu verschieben, kann die Massenspeicherverwaltung Speicherblöcke des öffentlichen Massenspeicherbereichs markieren - vorzugsweise mittels einer kontrollierten Dateisystemmanipulation, z.B. einer gezielten Änderung der entsprechenden Dateisystemtabelle - und dadurch einen reservierten Speicherbereich innerhalb des öffentlichen Speicherbereichs bilden, der dem Zugriff der Dateisystemsteuerung des Endgeräts entzogen ist und als Erweiterung des privaten Massenspeicherbereichs fungiert. Dazu muss die Massenspeicherverwaltung das Dateisystem des öffentlichen Massenspeicherbereichs kennen und es gezielt manipulieren können.

Auf den reservierten Speicherbereich kann dann eine Applikation des Datenträgers direkt zugreifen, ohne hierzu den geräteseitigen Massenspeicherdienst des Endgeräts zu benötigen. Da der reservierte Speicherbereich genau wie der private Speicherbereich organisatorisch von dem öffentlichen Massenspeicherbereich getrennt ist, können weder Dateninkonsistenzen noch Zugriffskonflikte auftreten.

Für die Dateisystemsteuerung eines mit dem Datenträger verbundenen Endgeräts ist der reservierte Speicherbereich nicht zugänglich bzw. aufgrund des manipulierten bzw. mit einer Markierung in der Dateisystemtabelle belegten Dateisystems gar nicht sichtbar, so dass es für die Dateisystemsteuerung so erscheint, als ob der öffentliche Massenspeicherbereich nur den nicht reservierten Speicherbereich umfasst. Die Markierung kann beispielsweise in einer Defekt-Markierung bzw. Pseudo-Defekt-Markierung bestehen, die zwar der Dateisystemsteuerung des Endgeräts einen defekten Speicherblock signalisiert, für die Massenspeicherverwaltung des Datenträgers jedoch als solches erkennbar und reversibel ist.

Vorzugsweise kann eine Reservierung von Speicherblöcken des öffentlichen Massenspeicherbereichs nur dann erfolgen, wenn in dem entsprechenden Speicherblock keine Daten vorliegen, auf die die Dateisystemsteuerung zugreifen kann. Nicht mehr benötigte reservierte bzw. als defekt markierte Speicherblöcke kann die Massenspeicherverwaltung auch wieder für einen regulären Zugriff durch die Dateisystemsteuerung als Teil des öffentlichen Speicherbereichs freigeben.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig. 1: eine Übersicht des erfindungsgemäßen Verfahrens anhand einer Darstellung eines erfindungsgemäßen Datenträgers in Verbindung mit einem Endgerät;
- Fig. 2: einen Massenspeicherzugriff gemäß dem Standes der Technik; und
- Fig. 3: einen Massenspeicher, dessen öffentliche Speicherbereich reservierte Speicherblöcke umfasst.

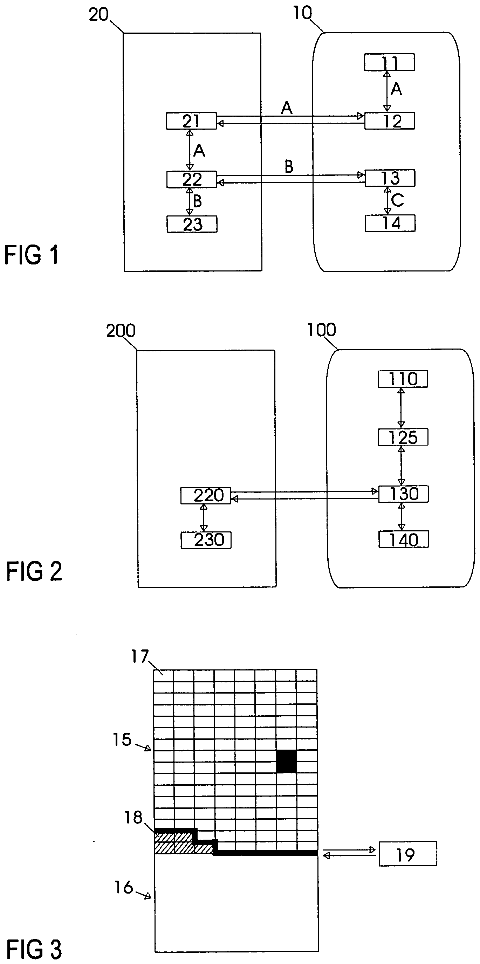

Fig. 1 zeigt einen erfindungsgemäßen Datenträger 10, der über eine Schnittstelle (nicht dargestellt) mit einem erfindungsgemäßen Endgerät 20 eine Datenkommunikationsverbindung unterhält. Im Zusammenhang mit der nachfolgenden Beschreibung wird als erfindungsgemäßer portabler Datenträger eine Chipkarte 10 beschrieben, die in ein Mobilfunkendgerät 20 als Endgerät eingesetzt wird und diesem einen Massenspeicher 14 in Form eines Flash-Speichers zur Verfügung stellt. Als Massenspeicher kommt jedoch prinzipiell jeder beliebige wiederbeschreibbare, nicht-volatile Speicher in Frage, z.B. auch ein EEPROM-Speicher oder dergleichen. Neben einer Chipkarte bzw. Mobilfunkkarte kann auch ein beliebiger anderer portabler Datenträger erfindungsgemäß ausgestaltet sein, z.B. eine sichere Multimediakarte, ein USB-Speicher oder dergleichen.

Sowohl die Chipkarte 10 als auch das Mobilfunkendgerät 20 umfassen je einen Prozessor (nicht dargestellt) zum Ausführen von Applikationen und Systemprogrammen sowie ein Betriebssystem (nicht dargestellt), welches jeweils die grundlegenden Funktionen der Chipkarte 10 und des Mobilfunkendgeräts 20 bereitstellt.

Der Flash-Speicher 14 bzw. das auf dem Flash-Speicher eingerichtete Dateisystem wird prinzipiell von dem Mobilfunkendgerät 20 vorgegeben, in das eine derartige Chipkarte 10 eingesetzt wird, da der Massenspeicher in erster Linie dem Endgerät 20 als Hintergrundspeicher zur Verfügung stehen soll. Vorzugsweise ist das von einer Dateisystemsteuerung 20, die von dem Prozessor des Mobilfunkendgeräts 20 ausgeführt werden kann, vorgegebene Dateisystem des Flash-Speichers 14 ein FAT-Dateisystem ("File Allocation Table"), z.B. ein FAT16- oder FAT32-Dateisystem, es ist jedoch auch jedes andere Dateisystem denkbar, das für einen Massenspeicher 14 eines portablen Datenträgers 10 geeignet ist.

Eine Massenspeichersteuerung 13, die im Falle eines Flash-Speichers 14 vorzugsweise ein FTL-Dienst ("Flash Translation Layer") ist, stellt die eigentlichen, hardwarenahen Zugriffsmechanismen auf den Flash-Speicher 14 mit seinem FAT-Dateisystem bereit, indem Schreib-/Lese-Zugriffe von Seiten des Mobilfunkendgeräts 20 unter Berücksichtigung z. B. der langen Löschzeiten von NOR-Flash-Speicherblöcken umgesetzt werden.

Ausgehend von der oben beschriebenen Anordnung illustriert Fig. 2 ein bekanntes Verfahren zur Durchführung eines Zugriffs von einer auf der Chipkarte 100 ausgeführten Applikation 110 auf einen Flash-Speicher 140 mittels eines FTL-Dienstes 130. Hierbei wird von einer Dateisystemsteuerung 220 des Mobilfunkendgeräts 200 über MSC-Kommandos ("Mass Storage Class") auf den FTL-Dienst 130 und weiter auf den Flash-Speicher 140 lesend oder schreibend zugegriffen. Die Applikation 110 der Chipkarte 100 verwendet bei einem Zugriff auf den Flash-Speicher 140 eine eigene Dateisystemsteuerung 125 der Chipkarte 100, die kompatibel mit der Dateisystemsteuerung 220 des Mobilfunkendgeräts 200 sein muss, also z.B. auch das Dateisystem FAT16 oder FAT32 unterstützt. Ein Zugriff von dem Endgerät 200 auf den Flash-Massenspeicher 140 erfolgt über den FTL-Dienst 130 ohne Einbindung oder Berücksichtigung der Dateisystemsteuerung 125 der Chipkarte 100, während der Zugriff einer Applikation 110 über die Dateisystemsteuerung 125 der Chipkarte 100 ebenso ohne Einbindung der Dateisystemsteuerung 220 des Mobilfunkendgeräts 200 erfolgt. Eine Synchronisation der Dateisystemsteuerungen 220 und 125 ist hierbei nicht vorgesehen, wodurch insbesondere bei einem auf dem Mobilfunkendgerät 200 vorgesehen Pufferspeicher 230, der gepufferte Speicherblöcke des Flash-Massenspeichers 140 für einen schnelleren Zugriff durch das Mobilfunkendgerät 200 bereithält, Dateninkonsistenzen auftreten können.

Demgegenüber werden bei der in Fig. 1 skizzierten erfindungsgemäßen Lösung alle Zugriffe auf Daten des Flash-Massenspeichers 14, sei es von einer Applikation 11 der Chipkarte 10 oder von einer Applikation oder sonstigen Routine des Mobilfunkendgeräts 20, in jedem Falle über koordinierende Komponenten des Mobilfunkendgeräts 20, nämlich über den geräteseitigen Massenspeicherdienst 21 sowie die Dateisystemsteuerung 22 abgewickelt.

Der geräteseitige Massenspeicherdienst 21 sowie die Dateisystemsteuerung 22 können auf einem Prozessor des Endgeräts 20 ausgeführte Applikationen, Systemprogramme oder Betriebssystemroutinen sein. Falls es sich bei dem Endgerät um ein Mobilfunkendgerät 20 oder ein vergleichbares mobiles Gerät handelt, z.B. ein "Smartphone", kann zumindest der geräteseitige Massenspeicherdienst 21 ein "MIDlet" sein, das vorzugsweise in der Programmiersprache Java geschrieben ist.

Die Chipkarte 10 umfasst mit dem datenträgerseitigen Massenspeicherdienst 12 eine mit dem geräteseitigen Massenspeicherdienst 21 korrespondierende Komponente. Der datenträgerseitige und der geräteseitige Massenspeicherdienst 12, 21 kommunizieren über eine entsprechende Schnittstelle des Mobilfunkendgeräts 20, an die die Chipkarte 10 angeschlossen ist, direkt miteinander. Der datenträgerseitige Massenspeicherdienst 12 greift ein Speicherkommando A einer Applikation 11 auf, das einen lesenden oder schreibenden Zugriff auf Daten des Flash-Massenspeichers 14 betrifft, und überträgt es an den geräteseitigen Massenspeicherdienst 21. Dieser leitet das Speicherkommando A an die Dateisystemsteuerung 22 weiter, die das zunächst abstrakte und speicherunabhängige Speicherkommando A in ein Dateisystemkommando B umsetzt, welches den mit dem Speicherkommando A beabsichtigten Schreib-/Lesezugriff auf den Flash-Massenspeicher 14 unter Berücksichtigung der Dateisystemstruktur des Massenspeichers 14 kodiert. Das Dateisystemkommando B wird über die Schnittstelle zwischen Mobilfunkendgerät 20 und Chipkarte 10 an die Massenspeichersteuerung 13 gesendet, die den eigentlichen Massenspeicherzugriff durchführt, indem Daten physikalisch in den Massenspeicher 14 eingeschrieben oder aus diesem ausgelesen werden. Im Falle eines Flash-Massenspeichers 14 mit einem FAT-Dateisystem ist die Massenspeichersteuerung 13 ein FTL-Dienst, welcher das Dateisystemkommando B mittels eines hardwarenahen Speicherzugriffs C ausführt.

Falls das Mobilfunkendgerät 20 einen Pufferspeicher 23 besitzt, der Speicherblöcke des Flash-Massenspeichers 14 in Kopie bereitstellt, um schnellere und einfachere Speicherzugriffe durch Komponenten des Mobilfunkendgeräts 20 zu ermöglichen, wird das Dateisystemkommando B von der Dateisystemsteuerung 22 direkt auf den Pufferspeicher 23 angewandt. Der Abgleich der Daten des Pufferspeichers 23 mit denjenigen des Massenspeichers 14 wird dann regelmäßig oder auf Aufforderung durchgeführt, z.B. durch entsprechende Kopierkommandos auf Veranlassung der Dateisystemsteuerung 22 oder einer separaten Abgleichsfunktion des Mobilfunkendgeräts 20 oder der Chipkarte 10. Der im Rahmen des Abgleichs notwendige Schreibzugriff auf den Flash-Massenspeicher 14 wird letztlich wieder von der Massenspeichersteuerung bzw. dem FTL-Dienst 13 in der oben beschriebenen Weise durchgeführt.

Die Chipkartenapplikation 11 greift somit unter Vermittlung des geräteseitigen Massenspeicherdiensts 21 sowie der Dateisystemsteuerung 22 auf den FTL-Dienst 13 und somit auf die Daten des Flash-Massenspeichers 14 zu. Eine eigene Dateisystemverwaltung oder eine Kenntnis der Chipkarte 10 über das auf dem Massenspeicher 14 eingerichtete Dateisystem ist hierfür nicht erforderlich. Die Kommunikation zwischen dem geräteseitigen und dem datenseitigen Massenspeicherdienst 21, 12 kann hierbei gemäß einem Master/Slave- bzw. Server/Client-Verhältnis organisiert sein, bei dem der geräteseitige Massenspeicherdienst 21 Anfragen und Anweisungen an den datenträgerseitigen Massenspeicherdienst 12 richtet und/oder die Inanspruchnahme von Speicherressourcen durch Komponenten oder Applikationen 11 des Datenträgers 10 koordiniert und befriedigt.

Vorzugsweise ist die Chipkarte 10 nicht nur mit dem lauffähigen datenträgerseitigen Massenspeicherdienst 12 ausgestattet, sondern auch mit einer Installationsversion des geräteseitigen Massenspeicherdiensts 21, um diesen auf Endgeräte 20, wie z.B. ein Mobilfunkendgerät, überspielen zu können, die mit der Chipkarte 10 zwar in Kontakt stehen, aber bisher noch keinen auf den speziellen Typ des von der Chipkarte 10 bereitgestellten Massenspeichers 14 abgestimmten geräteseitigen Massenspeicherdienst 21 aufweisen. Bei einem erstmaligen Kontakt eines solchen Endgeräts 20 mit einer Chipkarte 10 wird der geräteseitige Massenspeicherdienst 21 vorzugsweise automatisch auf das Endgerät 20 überspielt und dort installiert. Der installierte geräteseitige Massenspeicherdienst 21 kann auf dem Endgerät 20 verbleiben, auch wenn die Verbindung zu dem Datenträger 10 getrennt wird, so dass das Endgerät 20 in Zukunft eine prinzipielle Unterstützung des Typs des Massenspeichers 14 der Chipkarte 10 bereitstellt.

Vorzugsweise liegt der geräteseitige Massenspeicherdienst 21 auf der Chipkarte 10 als Java-MIDlet vor, das nach einem Überspielen auf ein Endgerät 20 von diesem unmittelbar ausgeführt bzw. interpretiert werden kann. Ein solches geräteseitiges Massenspeicher-MIDlet 21 wird bei erstmaliger Benutzung z.B. eines Flash-Massenspeichers 14 durch das Endgerät 20 von der Chipkarte 10 auf das Endgerät 20 geladen. Auf dem Endgerät 20 vorhandene weitere Dienste und MIDlets zur Unterstützung anderer Massenspeicher, z.B. weiterer Flash-Massenspeicher, bleiben hiervon unbeeinflusst.

Fig. 3 zeigt eine Erweiterung der Anordnung der Chipkarte 10 der Fig. 1 um eine Massenspeicherverwaltung 19, die z.B. Teil des Betriebssystems der Chipkarte 10 sein kann. Die Massenspeicherverwaltung 19 teilt den Flash-Massenspeicher 14 in einen öffentlichen Massenspeicherbereich 15 und einen privaten Massenspeicherbereich 16. Der öffentliche Speicherbereich 15 bildet dann den eigentlichen Massenspeicher, der für Endgeräte 20, die mit der Chipkarte 10 in Kontakt stehen, sichtbar und zugänglich ist. Die Dateisystemsteuerung 22 des Endgeräts 20 erkennt somit vorzugsweise lediglich den öffentlichen Speicherbereich 15, während der private Speicherbereich 16 für die Datensystemsteuerung 22 verborgen ist.

Der private Speicherbereich 16 ist vorgesehen, um nur intern exklusiv durch die Chipkarte 10 bzw. ihre Applikationen 11 genutzt zu werden. Der private Speicherbereich 16 kann somit von der Chipkarte 10 beliebig genutzt und z.B. mit einem proprietären Dateisystem betrieben werden, während der öffentliche Speicherbereich 15 - wie oben beschrieben - von einem mit der Chipkarte 10 verbundenen Endgerät 20 verwaltet wird. Insbesondere wird das Dateisystem des öffentlichen Speicherbereichs 15 von der Dateisystemsteuerung 22 des Endgeräts 20 vorgegeben und z.B. in Speicherblöcken 17 eines FAT-Dateisystems organisiert. Das von der Dateisystemsteuerung 22 auf dem öffentlichen Speicherbereich 15 eingerichtete Dateisystem nutzt den zugewiesenen öffentlichen Speicherbereich 15 dabei vollständig aus.

Die Grenze zwischen dem öffentlichen Speicherbereich 15 und dem privaten Speicherbereich 16 ist dabei nicht starr und unveränderlich, obwohl eine Veränderung von derartigen Partitionsparametern im Allgemeinen nicht möglich ist oder eine aufwendige Umorganisation zumindest des auf dem öffentlichen Speicherbereich 15 eingerichteten Dateisystems zur Folge hätte. Vielmehr kann die Massenspeicherverwaltung 19 vorliegend Speicherblöcke 18 des öffentlichen Speicherbereichs 15 zur internen Nutzung durch die Chipkarte 10 reservieren. Die reservierten Speicherblöcke 18 werden dadurch dem privaten Massenspeicherbereich 16 zugeschlagen und vergrößern diesen (vgl. Trennlinie zwischen dem Speicherbereichen in Fig. 3).

Um einen Datenverlust zu vermeiden, werden von der Massenspeicherverwaltung 19 vorzugsweise nur solche Speicherblöcke 17 reserviert, die leer sind, also zumindest keine Daten des Endgeräts 20 enthalten. Dazu werden Speicherblöcke 18, die in dem Dateisystem des öffentlichen Speicherbereichs 15 als frei markiert sind, von der Massenspeicherverwaltung 19 für die Dateisystemsteuerung 22 sichtbar mit einer Defekt- oder Pseudo-Defekt-Markierung belegt. Vorzugsweise kann die Massenspeicherverwaltung 19 hierzu das Dateisystem des öffentlichen Speicherbereichs 15 direkt derart manipulieren, dass eine Dateisystemsteuerung 22 die reservierten Speicherblöcke 18 für tatsächlich defekte Speicherblöcke hält. Die Dateisystemsteuerung 22 kann dann nur auf diejenigen Speicherblöcke 17 des öffentlichen Bereichs 15 zugreifen, die nicht durch die Massenspeicherverwaltung 19 pseudo-defekt markiert wurden und die nicht tatsächlich defekt sind (vgl. schwarz ausgefüllte Speicherblöcke in Fig. 3). Die pseudo-defekten und die tatsächlich defekten Speicherblöcke sind für die Dateisystemsteuerung 22 vorzugsweise nicht unterscheidbar. Die Massenspeicherverwaltung 19 kann reservierte Speicherblöcke 18 auch wieder freigegeben und somit erneut unter die Kontrolle der Dateisystemsteuerung 22 stellen.

Zur Reservierung und Freigabe von Speicherblöcken 18 des öffentlichen Massenspeicherbereichs 17 muss die Massenspeicherverwaltung 19 das von der Dateisystemsteuerung 22 in dem öffentlichen Speicherbereich 15 eingerichtete Dateisystem unterstützen. Vorzugsweise besitzt die Massenspeicherverwaltung 19 hierzu eine eigene Dateisystemunterstützung, um von einem mit der Chipkarte 10 verbundenen Endgerät 20 unabhängig operieren zu können.

## Patentansprüche

1. Verfahren zum Zugreifen auf Daten eines Massenspeichers (14) eines portablen Datenträgers (10), der mit einem Endgerät (20) in Verbindung steht, durch eine auf dem Datenträger (10) ausgeführte Applikation (11), **gekennzeichnet durch** die Schritte:
- Senden eines den Zugriff auf Daten des Massenspeichers (14) betreffenden Speicherkommandos (A) der Applikation (11) an einen auf dem Endgerät (20) ausgeführten geräteseitigen Massenspeicherdienst (21); und
- Zugreifen auf Daten des Massenspeichers (14) gemäß dem Speicherkommando (A) durch den geräteseitigen Massenspeicherdienst (21).

2. Verfahren nach Anspruch 1, **dadurch gekennzeichnet, dass** das Senden des Speicherkommandos (A) an den geräteseitigen Massenspeicherdienst (21) folgende Schritte umfasst:
- Weiterleiten des Speicherkommandos (A) von der Applikation (11) an einen auf dem Datenträger (10) ausgeführten datenträgerseitigen Massenspeicherdienst (12); und
- Senden des Speicherkommandos (A) von dem datenträgerseitigen Massenspeicherdienst (12) an den geräteseitigen Massenspeicherdienst (21).

3. Verfahren nach Anspruch 1 oder 2, **dadurch gekennzeichnet, dass** auf dem Massenspeicher (14) ein von einer auf dem Endgerät (20) ausgeführten Dateisystemsteuerung (22) vorgegebenes Dateisystem eingerichtet ist, wobei das Zugreifen auf Daten des Massenspeichers (14) durch den geräteseitigen Massenspeicherdienst (21) folgende Schritte umfasst:
- Weiterleiten des Speicherkommandos (A) an die Dateisystemsteuerung (22) durch den geräteseitigen Massenspeicherdienst (21);
- Umsetzen des Speicherkommandos (A) in ein Dateisystemkommando (B) durch die Dateisystemsteuerung (22); und
- Zugreifen auf das Dateisystem des Massenspeichers (14) gemäß dem Dateisystemkommando (B) durch die Dateisystemsteuerung (22).

4. Verfahren nach Anspruch 3, **dadurch gekennzeichnet, dass** eine auf dem Datenträger (10) ausgeführte Massenspeicherverwaltung (19) Speicherbereiche (18) des Massenspeichers für exklusive Zugriffe des Datenträgers (10) reservieren und reservierte Speicherbereiche (18) freigeben kann, wobei ein reservierter Speicherbereich (18) gegenüber der Dateisystemsteuerung (22) als defekter Speicherbereich oder als Speicherbereich mit einem defekten Dateisystem erscheint.

5. Verfahren nach Anspruch 4, **dadurch gekennzeichnet, dass** die Massenspeicherverwaltung (19) nur Speicherbereiche (18) des Massenspeichers reserviert, die keine Daten aufweisen, auf die die Dateisystemverwaltung (22) zugreifen kann.

6. Verfahren nach einem der Ansprüche 3 bis 5, **dadurch gekennzeichnet, dass** das Endgerät (20) einen dem Massenspeicher (14) vorgeschalteten Pufferspeicher (23) umfasst, wobei der Schritt des Zugreifens auf das Dateisystem des Massenspeichers (14) folgende Schritte umfasst:
- Zugreifen auf den Pufferspeicher (23) gemäß dem Dateisystemkommando (B) durch die Dateisystemsteuerung (22); und
- Abgleichen der Daten des Massenspeichers (14) mit den Daten des Pufferspeichers (23) durch die Dateisystemsteuerung (22).

7. Verfahren nach einem der Ansprüche 3 bis 5, **dadurch gekennzeichnet, dass** der Schritt des Zugreifens auf das Dateisystem des Massenspeichers (14) folgende Schritte umfasst:
- Senden des Dateisystemkommandos (B) von der Dateisystemsteuerung (22) an eine auf dem Datenträger (10) ausgeführte Massenspeichersteuerung (13) des Massenspeichers (14); und
- Durchführen eines Zugriffs (C) auf Daten des Massenspeichers (14) basierend auf dem Dateisystemkommando (B) durch die Massenspeichersteuerung (13).

8. Verfahren nach einem der Ansprüche 1 bis 7, **dadurch gekennzeichnet, dass** der geräteseitige Massenspeicherdienst (21) auf dem Datenträger (10) vorhanden ist und vor dem Zugreifen auf Daten des Massenspeichers (14) von dem Datenträger (10) auf das Endgerät (20) überspielt wird, sofern der geräteseitige Massenspeicherdienst (21) auf dem Endgerät (20) nicht vorhanden ist, wobei der geräteseitige Massenspeicherdienst (21) auf dem Endgerät (20) verbleiben kann, wenn die Verbindung zwischen dem Datenträger (10) und dem Endgerät (20) getrennt wird.

9. Verfahren nach einem der Ansprüche 1 bis 8, **dadurch gekennzeichnet, dass** das Speicherkommando (A) der Applikation (11) einen Lesezugriff und/oder einen Schreibzugriff auf Daten des Massenspeichers (14) betrifft.

10. Verfahren nach einem der Ansprüche 1 bis 9, **dadurch gekennzeichnet, dass** das Verfahren mit einer Chipkarte oder sicheren Multimediakarte als portablem Datenträger (10), einem Flash-Speicher mit einem FAT-Dateisystem als Massenspeicher (14) und einem Mobilfunkendgerät oder Computer als Endgerät (20) durchgeführt wird.

11. Portabler Datenträger (10), umfassend einen Massenspeicher (14), einen Prozessor, eine Schnittstelle zur Verbindung des Datenträgers (10) mit einem Endgerät (20) sowie eine auf dem Prozessor ausführbare Applikation (11), **gekennzeichnet durch** einen auf dem Prozessor ausführbaren datenträgerseitigen Massenspeicherdienst (12), der eingerichtet ist, ein den Zugriff auf Daten des Massenspeichers (14) betreffendes Speicherkommando (A) der Applikation (11) an ein mit dem Datenträger (10) über die Schnittstelle verbundenes Endgerät (20) zu senden, und eine Massenspeichersteuerung (13), die eingerichtet ist, einen Zugriff auf Daten des Massenspeichers (14) durch das Endgerät (20) gemäß dem an das Endgerät gesendeten Speicherkommando (A) zu ermöglichen.

12. Datenträger (10) nach Anspruch 11, **dadurch gekennzeichnet, dass** der datenträgerseitige Massenspeicherdienst (12) eingerichtet ist, das Speicherkommando (A) der Applikation (11) an einen korrespondierenden geräteseitigen Massenspeicherdienst (21) eines Endgerät (20) zu senden, das mit dem Datenträger (10) verbunden ist.

13. Datenträger (10) nach Anspruch 11 oder 12, **dadurch gekennzeichnet, dass** auf dem Massenspeicher (14) ein von einem Endgerät (20) vorgegebenes Dateisystem eingerichtet ist und die Massenspeichersteuerung (13) eingerichtet ist, einen Zugriff auf das Dateisystem des Massenspeichers (14) auf Veranlassung eines ein mit dem Datenträger (10) verbundenen Endgeräts (20) gemäß dem Speicherkommando (A) durchzuführen.

14. Datenträger (10) nach Anspruch 13 **gekennzeichnet durch** eine Massenspeicherverwaltung (19), die eingerichtet ist, Speicherbereiche (18) des Massenspeichers (14) für exklusive Zugriffe des Datenträgers (10) zu reservieren und reservierte Speicherbereiche (18) freizugeben, wobei die Reservierung durch eine Markierung derart erfolgt, dass der reservierte Speicherbereich (18) von einem mit dem Datenträger (10) verbundenen Endgerät (20) als defekter Speicherbereich oder als Speicherbereich mit einem defekten Dateisystem interpretiert wird.

## Claims

1. A method for accessing data of a mass storage (14) of a portable data carrier (10) which is connected with a terminal (20) by an application (11) executed on the data carrier (10), **characterized by** the steps of:
- sending a storage command (A) of the application (11) relating to the access to data of the mass storage (14) to a terminal-side mass storage service (21) executed on the terminal (20); and
- accessing data of the mass storage (14) in accordance with the storage command (A) by the terminal-side mass storage service (21).

2. The method according to claim 1, **characterized in that** the sending of the storage command (A) to the terminal-side mass storage service (21) comprises the following steps of:
- forwarding the storage command (A) from the application (11) to a data-carrier-side mass storage service (12) executed on the data carrier (10); and
- sending the storage command (A) from the data-carrier-side mass storage service (12) to the terminal-side mass storage service (21).

3. The method according to claim 1 or 2, **characterized in that** on the mass storage (14) a file system is set up which is predetermined by a file system control (22) executed on the terminal (20), wherein accessing data of the mass storage (14) by the terminal-side mass storage service (21) comprises the following steps of:
- forwarding the storage command (A) to the file system control (22) by the terminal-side mass storage service (21);
- converting the storage command (A) into a file system command (B) by the file system control (22); and
- accessing the file system of the mass storage (14) in accordance with the file system command (B) by the file system control (22).

4. The method according to claim 3, **characterized in that** a mass storage management (19) executed on the data carrier (10) can reserve storage areas (18) of the mass storage for exclusive accesses of the data carrier (10) and can release reserved storage areas (18), wherein a reserved storage area (18) appears vis-à-vis the file system control (22) as a defective storage area or as a storage area or with a defective file system.

5. The method according to claim 4, **characterized in that** the mass storage management (19) reserves only storage areas (18) of the mass storage which have no data which can be accessed by the file system management (22).

6. The method according to any one of claims 3 to 5, **characterized in that** the terminal (20) comprises a buffer storage (23) upstream of the mass storage (14), wherein the step of accessing the file system of the mass storage (14) comprises the following steps of:
- accessing the buffer storage (23) in accordance with the file system command (B) by the file system control (22); and
- matching the data of the mass storage (14) with the data of the buffer storage (23) by the file system control (22).

7. The method according to any one of claims 3 to 5, **characterized in that** the step of accessing the file system of the mass storage (14) comprises the following steps of:
- sending the file system command (B) from the file system control (22) to a mass storage control (13) of the mass storage (14) executed on the data carrier (10); and
- carrying out an access (C) to data of the mass storage (14) on the basis of the file system command (B) by the mass storage control (13).

8. The method according to any one of claims 1 to 7, **characterized in that** the terminal-side mass storage service (21) is present on the data carrier (10) and, in the event that the terminal-side mass storage service (21) is not present on the terminal (20), is transferred from the data carrier (10) to the terminal (20) prior to accessing data of the mass storage (14), wherein the terminal-side mass storage service (21) can remain on the terminal (20) when the connection between the data carrier (10) and the terminal (20) is disconnected.

9. The method according to any one of claims 1 to 8, **characterized in that** the storage command (A) of the application (11) relates to a read access and/or write access to data of the mass storage (14).

10. The method according to any one of claims 1 to 9, **characterized in that** the method is carried out with a chip card or secure multimedia card as the portable data carrier (10), a flash storage with a FAT file system as the mass storage (14) and a mobile communication terminal or computer as the terminal (20).

11. A portable data carrier (10) comprising a mass storage (14), a processor, an interface for connection of the data carrier (10) with a terminal (20) and an application (11) executable on the processor, **characterized by** a data-carrier-side mass storage service (12) which is executable on the processor and is adapted to send a storage command (A) of the application (11) relating to an access to data of the mass storage (14) to a terminal (20) connected with the data carrier (10) via the interface, and a mass storage control (13) which is adapted to enable an access to data of the mass storage (14) by the terminal (20) in accordance with the storage command (A) sent to the terminal.

12. The data carrier (10) according to claim 11, **characterized in that** the data-carrier-side mass storage service (12) is adapted to send the storage command (A) of the application (11) to a corresponding terminal-side mass storage service (21) of a terminal (20) which is connected with the data carrier (10).

13. The data carrier (10) according to claim 11 or 12, **characterized in that** on the mass storage (14) a file system predetermined by a terminal (20) is set up, and the mass storage control (13) is adapted to carry out an access to the file system of the mass storage (14) in accordance with the storage command (A) upon initiation by a terminal (20) connected with the data carrier (10).

14. The data carrier (10) according to claim 13, **characterized by** a mass storage management (19) which is adapted to reserve storage areas (18) of the mass storage (14) for exclusive accesses of the data carrier (10), and to release reserved storage areas (18), wherein the reservation by a mark is effected in such a manner that the reserved storage area (18) is interpreted as a defective storage area or as a storage area with a defective file system by a terminal (20) connected with the data carrier (10).

## Revendications

1. Procédé d'accès à des données d'une mémoire de masse (14) d'un support de données (10) portable connecté à un terminal (20), par une application (11) exécutée sur le support de données (10), **caractérisé par** les étapes :
- envoi d'une instruction de mémoire (A), concernant l'accès à des données de la mémoire de masse (14), de l'application (11), à un service de mémoire de masse (21) côté terminal exécuté sur le terminal (20) ; et
- accès à des données de la mémoire de masse (14) conformément à l'instruction de mémoire (A), par le service de mémoire de masse (21) côté terminal.

2. Procédé selon la revendication 1, **caractérisé en ce que** l'envoi de l'instruction de mémoire (A) au service de mémoire de masse (21) côté terminal comprend les étapes suivantes :
- transfert de l'instruction de mémoire (A) de l'application (11) à un service de mémoire de masse (12) côté support de données exécuté sur le support de données (10) ; et
- envoi de l'instruction de mémoire (A) du service de mémoire de masse (12) côté support de données au service de mémoire de masse (21) côté terminal.

3. Procédé selon la revendication 1 ou 2, **caractérisé en ce que**, sur la mémoire de masse (14), un système de fichiers prescrit par une commande système de fichiers (22) exécutée sur le terminal (20) est installé, cependant que l'accès à des données d'une mémoire de masse (14) par le service de mémoire de masse (21) côté terminal comprend les étapes suivantes :
- transfert de l'instruction de mémoire (A) à la commande système de fichiers (22) par le service de mémoire de masse (21) côté terminal ;
- conversion de l'instruction de mémoire (A) en une instruction de système de fichiers (B) par la commande système de fichiers (22) ; et
- accès au système de fichiers de la mémoire de masse (14) conformément à l' instruction de système de fichiers (B), par la commande système de fichiers (22).

4. Procédé selon la revendication 3, **caractérisé en ce qu'**une gestion de mémoire de masse (19) exécutée sur le support de données (10) peut réserver des zones mémoire (18) de la mémoire de masse pour des accès exclusifs du support de données (10) et débloquer des zones mémoire (18) réservées, cependant qu'une zone mémoire (18) réservée apparaît vis-à-vis de la commande système de fichiers (22) comme une zone mémoire défectueuse ou comme une zone mémoire ayant un système de fichiers défectueux.

5. Procédé selon la revendication 4, **caractérisé en ce que** la gestion de mémoire de masse (19) ne réserve que des zones mémoire (18) de la mémoire de masse qui ne comportent pas de données auxquelles la gestion de système de fichiers (22) peut accéder.

6. Procédé selon une des revendications de 3 à 5, **caractérisé en ce que** le terminal (20) comprend une mémoire tampon (23) située en amont de la mémoire de masse (14), cependant que l'étape de l'accès au système de fichiers de la mémoire de masse (14) comprend les étapes suivantes :
- accès à la mémoire tampon (23) conformément à l'instruction de système de fichiers (B), par la commande système de fichiers (22) ; et
- comparaison des données de la mémoire de masse (14) avec les données de la mémoire tampon (23), par la commande système de fichiers (22).

7. Procédé selon une des revendications de 3 à 5, **caractérisé en ce que** l'étape de l'accès au système de fichiers de la mémoire de masse (14) comprend les étapes suivantes :
- envoi de l'instruction de système de fichiers (B) de la commande système de fichiers (22) à une commande de mémoire de masse (13), de la mémoire de masse (14), exécutée sur le support de données (10) ; et
- réalisation d'un accès (C) à des données de la mémoire de masse (14) sur la base de l'instruction de système de fichiers (B), par la commande de mémoire de masse (13).

8. Procédé selon une des revendications de 1 à 7, **caractérisé en ce que** le service de mémoire de masse (21) côté terminal se trouve sur le support de données (10) et est, avant l'accès à des données de la mémoire de masse (14), enregistré depuis le support de données (10) sur le terminal (20) dans la mesure où le service de mémoire de masse (21) côté terminal ne se trouve pas sur le terminal (20), cependant que le service de mémoire de masse (21) côté terminal peut demeurer sur le terminal (20) si la connexion entre le support de données (10) et le terminal (20) est coupée.

9. Procédé selon une des revendications de 1 à 8, **caractérisé en ce que** l'instruction de mémoire (A) de l'application (11) concerne un accès en lecture et/ou un accès en écriture à des données de la mémoire de masse (14).

10. Procédé selon une des revendications de 1 à 9, **caractérisé en ce que** le procédé est effectué avec une carte à puce ou carte de multimédia sécurisée en tant que support de données (10) portable, avec une mémoire flash à système de fichiers FAT en tant que mémoire de masse (14), et avec un terminal de radiocommunication mobile ou ordinateur en tant que terminal (20).

11. Support de données (10) portable comprenant une mémoire de masse (14), un processeur, une interface pour la connexion du support de données (10) avec un terminal (20), ainsi qu'une application (11) exécutable sur le processeur, **caractérisé par** un service de mémoire de masse (12) côté support de données qui est exécutable sur le processeur et qui est configuré pour envoyer une instruction de mémoire (A), concernant l'accès à des données de la mémoire de masse (14), de l'application (11), à un terminal (20) connecté avec le support de données (10) par l'intermédiaire de l'interface, et par une commande de mémoire de masse (13) qui est configurée pour permettre un accès à des données de la mémoire de masse (14) par le terminal (20) conformément à l'instruction de mémoire (A) envoyée au terminal.

12. Support de données (10) selon la revendication 11, **caractérisé en ce que** le service de mémoire de masse (12) côté support de données est configuré pour envoyer l'instruction de mémoire (A) de l'application (11) à un service de mémoire de masse (21) correspondant côté terminal, d'un terminal (20) connecté au support de données (10).

13. Support de données (10) selon la revendication 11 ou 12, **caractérisé en ce que**, sur la mémoire de masse (14), un système de fichiers prescrit par un terminal (20) est installé, et que la commande de mémoire de masse (13) est configurée pour réaliser un accès au système de fichiers de la mémoire de masse (14) conformément à l'instruction de mémoire (A) à l'instigation d'un terminal (20) connecté au support de données (10).

14. Support de données (10) selon la revendication 13, **caractérisé par** une gestion de mémoire de masse (19) configurée pour réserver des zones mémoire (18) de la mémoire de masse (14) pour des accès exclusifs du support de données (10) et pour débloquer des zones mémoire (18) réservées, cependant que la réservation est effectuée de telle façon par un marquage que la zone mémoire (18) réservée est interprétée par un terminal (20) connecté au support de données (10) comme une zone mémoire défectueuse ou comme une zone mémoire ayant un système de fichiers défectueux.
